# EUROPEAN PATENT APPLICATION

(11) **EP 1 515 512 A2**
(43) Date of publication of application: **16.03.2005**
(21) Application number: 04021473.6
(22) Date of filing: 09.09.2004
(51) Int. Cl.: H04L 29/06

(54) **Location based information delivery**

(30) Priority: 11.09.2003 JP 2003319910
(71) Applicant: NEC CORPORATION, Tokyo (JP)
(72) Inventor: Ono, Yoshihiro c/o NEC Corporation, Tokyo (JP)
(74) Representative: Glawe. Delfs. Moll

(57) **Abstract**

There are provided an information providing system that enables a mobile terminal, when it is located within a communicable area of a wireless access point, to easily acquire information content related to the communicable area, a mobile terminal, a wireless access point, a charging server and an information providing method. When entering an area where information can be received, a mobile terminal 10 displays that it has entered an area where information can be acquired on the screen of a display section 14. When the mobile terminal user operates the mobile terminal 10 to select a predetermined area on the display, a request to acquire information content is sent to an information providing server 30 via a network 40. The information providing server 30.

## Description

### BACKGROUND OF THE INVENTION

### Field of the Invention

The present invention relates to an information providing system, a mobile terminal, a wireless access point and a charging server used in the system, and an information providing method, and in particular to an information providing system, a mobile terminal, a wireless access point and a charging server used in the system, and an information providing method for delivering information specific to an communicable area of a wireless access point to a mobile terminal located in the communicable area.

### Description of the Related Art

There has been employed a service for providing information related to the current position of a mobile terminal via the Internet. This is a service by utilizing the fact that a server on a network grasps which base station area the mobile terminal belongs to, provide regional information within a base station area to a mobile terminal as a Web service.

For example, when a mobile terminal sends position information indicating its current position to a server, the server provides web content appropriate for the position based on the position information sent from the mobile terminal. The position information is provided to the mobile terminal from the mobile terminal network side (for example, a home location register (HLR)) as appropriate.

The range of a base station area in which the regional information is provided is generally a range with a diameter of several kilometers to over ten kilometers and is not a range within which a man can move on foot. That is, according to the above method, the regional web content to be provided is broader than the activity range of a human being, so an appropriate information sometimes cannot be provided for a user located in the area.

For example, when a user wants to find a restaurant to take a meal in several minutes, the server may provide information about a restaurant which the user cannot access without utilizing transportation part, to the user's mobile terminal.

As a prior-art technique for providing position-dependent information, Japanese Patent Laid-Open No. 2003-134546 (first document) discloses an information service providing system using attributes of a place.

In the Document, a wireless access point management apparatus is disclosed, and the apparatus manages position information and place attribute information about a wireless access point. When an mobile terminal sends identification information about the wireless access point notified by the wireless access point to an information providing apparatus, the information providing apparatus sends the identification information received from the mobile terminal to the wireless access point management apparatus. The wireless access point management apparatus returns the position and place attributes of the mobile terminal to the information providing apparatus, and the information providing apparatus provides information content related to the position and the place attributes to the mobile terminal.

In the Document, position-dependent information which has been constructed by searching the information is provided to the user on the basis of the position and the place.

Japanese Patent Laid-Open No. 2002-359863 (second document) is disclosed the information providing method having time and space restrictions. When entering a communicable area where communication with a base station is possible, a mobile terminal automatically detects and notifies that information originated from a base station can be received.

Conventionally known or employed information providing methods that depend on the position of a mobile terminal have problems. Since provided information from the mobile terminal is based on the geographical range of the position of the mobile terminal, provided information is broad and not necessarily information related to services available to a user of the mobile terminal immediately or within several minutes (problem 1). Since provided information on the basis of the geographical range of the position of the mobile terminal is broad, an information provider provides information even to users who do not desire provision of the information as a result (problem 2). A mobile terminal user is required to perform complicated operations of the terminal such as a search operation before he can access information he needs (problem 3).

For example, in the conventional service of providing regional information based on a base station area which a mobile phone belongs to, the range of one information providing region is broad (the above problem 1). Therefore, it is difficult for an information provider in the service to provide information to a mobile terminal user whom the information provider wants to provide the information (the above problem 2). Furthermore, the above service has a problem that the operation procedure to be performed by a mobile terminal user with the use of a mobile terminal such as a mobile telephone to obtain information he needs is complicated (the above problem 3).

In another method for providing position-dependent information, a global positioning system (GPS) is utilized. In this information providing method utilizing GPS, when a mobile terminal sends information about the position it has measured to an information providing server, the information providing server selects information from information in the server and delivers it to the mobile terminal. This information providing method utilizing GPS also has the above problems.

In the first document, a business entity that provides a place such as a coffee shop, a restaurant or a retailer for installation of a wireless access point or an entity that operates wireless access points has to perform a search processing by an information providing apparatus even when it wants to provide information to a mobile terminal user more directly and more quickly.

A case is also assumed that a mobile terminal user only needs means for easily acquiring information dependent on a particular position when he wants to acquire the information and does not need, when entering any wireless access point area, acquisition of information dependent on the position.

Furthermore, in the case where information is delivered whenever a user enters any wireless access point area, communication load on and power consumption by the mobile terminal is caused even when the user does not want to acquire the information, and he may have to pay an extra communication fee for it.

As described above, according to the prior-art technique disclosed by the first document, in constructing an information providing service to be provided between a mobile terminal user and a wireless access point installation-location provider or a wireless access point operator in consideration of profitability, there is a possibility that it is difficult for an information provider to provide information accurately with a speed expected by a user.

In the second document, though it is described that various kinds of information is provided in an area in which information originated from each base station can be received, there is no specific description on means for recognizing that a mobile terminal has entered the area and means for delivering information specific to the area to the mobile terminal.

The present invention has been made in consideration of the above problems, and its object is to provide an information providing system enabling a mobile terminal which is located in a communicable area of a wireless access point to easily acquire information content related to the communicable area, a mobile terminal, a wireless access point, a charging server and an information providing method.

### SUMMARY OF THE INVENTION

To achieve the above object, the present invention is an information providing system comprising a mobile terminal, one or more wireless access points capable of communicating with the mobile terminal via a wireless communication network in respective communicable areas, and an information providing server connected to the wireless access points via a network; the wireless access points having: acquisition request information delivery part for broadcast delivering acquisition request information for acquiring information content related to the respective communicable areas in the respective communicable areas; and the mobile terminal having: delivered information receiver for receiving the acquisition request information; a display for, when the acquisition request information is received by the acquisition request information receiver, displaying screen information indicating that it is possible to acquire information content related to the communicable area in which the mobile terminal is currently located; and information acquisition request part for sending a request to acquire the information content to the information providing server when the screen information is displayed; and the information providing server having: information content storage for storing one or more pieces of the information content; information content extracting part for receiving the request to acquire the information content from the mobile terminal and extracting appropriate information content from the one or more pieces of information content; and information content sending part for sending the extracted information content to the mobile terminal.

According to the present invention, the acquisition request information delivery part delivers the acquisition request information including the screen information and address information about information content related to a communicable area in which the acquisition request information is delivered; and the information acquisition request part sends a request to acquire the information content stored at an address shown by the address information.

According to the present invention, there is provided an information providing system comprising a mobile terminal, one or more wireless access points capable of communicating with the mobile terminal via a wireless communication network in the respective communicable areas, and an information providing server connected to the wireless access points via a network; the wireless access points having: identification information delivery part for broadcast delivering identification information for identifying the access point in the respective communicable areas; and the mobile terminal having: acquisition request information storage for storing one or more pieces of acquisition request information for acquiring information content related to the respective communicable areas; identification information receiver for receiving the identification information; acquisition request information extracting part for, when the identification information is received by the identification information receiver, extracting acquisition request information for acquiring information content related to a communicable area identified by the identification information from the one or more pieces of acquisition request information; a display for displaying screen information indicating that it is possible to acquire information content related to the communicable area in which the mobile terminal is currently located, the screen information being included in the extracted acquisition request information; and information acquisition request part for sending a request to acquire the information content to the information providing server when the screen information is displayed; and the information providing server having: information content storage for storing one or more pieces of the information content; information content extracting part for receiving the request to acquire the information content from the mobile terminal and extracting appropriate information content from the one or more pieces of information content; and information content sending part for sending the extracted information content to the mobile terminal.

According to the present invention, the acquisition request information storage stores the acquisition request information including the address information about information content related to a communicable area in which the acquisition request information is delivered; and the information acquisition request part sends a request to acquire the information content stored at an address shown by the address information.

According to the present invention, if the acquisition request information for acquiring information content related to a communicable area identified by the identification information received by the identification information receiver is not stored in the acquisition request information storage, the display displays screen information indicating that it is possible to acquire the information content; the acquisition request part sends the received identification information to the information providing server; the information content storage stores the one or more pieces of information content in association with the identification information; and the information content extracting part receives the identification information from the mobile terminal and extracts the information content associated with the received identification information.

According to the present invention, the information providing system has: server information storage for storing the one or more pieces of acquisition request information in association with the identification information; server information extracting part for extracting the acquisition request information associated with the identification information received from the mobile terminal; and server information sending part for sending the extracted acquisition request information to the mobile terminal; and the acquisition request information storage newly stores the acquisition request information sent from the information providing server.

According to the present invention, the information providing system further comprises an information provision charging server connected to the information providing server; wherein the information providing server has: sending history storage for storing sending history of the information content sent by the information content sending part; and sending history sending part for sending the stored sending history to the information provision charging server; and the information provision charging server has: service use fee calculator for, when receiving the sending history from the information providing server, calculating an information delivery service use fee to be paid from a business entity developing business related to the information content to a business entity managing the information providing server, based on the received sending history.

According to the present invention, the service use fee calculator calculates the information delivery service use fee based on information indicating the number of times the information content has been sent by the information content sending part, the information being included in the sending history.

According to the present invention, the service use fee calculator calculates the information delivery service use fee based on the data amount of the information content.

According to the present invention, the information providing system further comprises a network charging server connected to the network; wherein the network charging server has network use fee calculator for calculating a fee for use of the network to be paid from a user of the mobile terminal and the business entity managing the information providing server to a business entity managing the network, based on information indicating use condition of the network by the mobile terminal and the information providing server.

According to the present invention, there is provided a mobile terminal comprising: delivered information receiving part for, in a communicable area enabling communication with a wireless access point, receiving acquisition request information for acquiring information content related to the communicable area; a display for extracting screen information indicating that it is possible to acquire the information content from the received acquisition request information and displaying the screen information; and information acquisition request part for extracting address information about the information content from the received acquisition request information and sending a request to acquire the information content to an address shown by the address information when the screen information is displayed.

According to the present invention, there is provided a mobile terminal comprising: identification information receiving part for, in a communicable area enabling communication with a wireless access point, receiving identification information for identifying the wireless access point; acquisition request information storage for storing one or more pieces of acquisition request information for acquiring information content related to the communicable area; acquisition request information extracting part for, when the identification information is received by the identification information receiving part, extracting acquisition request information for acquiring information content related to a communicable area identified by the identification information from the one or more pieces of acquisition request information; a display for extracting screen information indicating that it is possible to acquire the information content from the extracted acquisition request information and displaying the screen information; and information acquisition request part for extracting address information about the information content from the extracted acquisition request information and sending a request to acquire the information content to an address shown by the address information when the screen information is displayed.

According to the present invention, there is provided a wireless access point for performing wireless communication with a mobile terminal in a communicable area, the wireless access point broadcast delivering, within the communicable area, acquisition request information including screen information indicating that it is possible to acquire information content related to the communicable area and address information about the information content.

According to the present invention, there is provided a charging server comprising: sending history input part for inputting sending history of sending of information content related to a communicable area of a wireless access point to a mobile terminal performing wireless communication with the wireless access point; and service use fee calculator for calculating an information delivery service use fee to be paid from a business entity developing business related to the information content to a business entity providing a service of sending the information content, based on the inputted sending history.

According to the present invention, there is provided a charging server comprising: use condition information input part for, when a mobile terminal requests acquisition of information content related to a communicable area of a wireless access point from equipment on the sending side of the information content and acquires the information content as a response to the request via a network, inputting information indicating condition of use of the network by the mobile terminal and the equipment on the sending side of the information content; and network use fee calculator for calculating a fee for use of the network to be paid from a user of the mobile terminal and a business entity sending the information content to a business entity managing the network, based on the inputted network use condition information.

According to the present invention, there is provided an information providing method, using a mobile terminal, one or more wireless access points capable of communicating with the mobile terminal via a wireless communication network in respective communicable areas, and an information providing server connected to the wireless access points via a network and comprising: an acquisition request information delivery step of the wireless access point broadcast delivering acquisition request information for acquiring information content related to the respective communicable areas in the respective communicable areas; and a delivered information receiving step of the mobile terminal receiving the acquisition request information; a display step of, when receiving the acquisition request information, the mobile terminal displaying screen information indicating that it is possible to acquire information content related to the communicable area in which the mobile terminal is currently located; an information acquisition request step of the mobile terminal sending a request to acquire the information content to the information providing server when the screen information is displayed; an information content extracting step of the information providing server receiving the request to acquire the information content from the mobile terminal and extracting appropriate information content from the one or more pieces of information content stored in the server; and an information content sending step of the information providing server sending the extracted information content to the mobile terminal.

According to the present invention, there is provided an information providing method, using a mobile terminal, one or more wireless access points capable of communicating with the mobile terminal via a wireless communication network in respective communicable areas, and an information providing server connected to the wireless access points via a network and comprising: an identification information delivery step of the respective wireless access points broadcast delivering identification information for identifying the respective access points in the respective communicable areas; and an acquisition request information storage step of the mobile terminal storing one or more pieces of acquisition request information for acquiring information content related to the respective communicable areas; an identification information receiving step of the mobile terminal receiving the identification information; an acquisition request information extracting step of, when receiving the identification information, the mobile terminal extracting acquisition request information for acquiring information content related to a communicable area identified by the identification information from the information content related to the one or more communicable areas, the information content being stored in the mobile terminal; a display step of the mobile terminal displaying screen information indicating that it is possible to acquire information content related to the communicable area in which the mobile terminal is currently located, the screen information being included in the extracted acquisition request information; an information acquisition request step of the mobile terminal sending a request to acquire the information content to the information providing server when the screen information is displayed; an information content extracting step of the information providing server receiving the request to acquire the information content from the mobile terminal and extracting appropriate information content from the one or more pieces of information content stored in the server; and an information content sending step of the information providing server sending the extracted information content to the mobile terminal.

According to the present invention, at the display step, if the acquisition request information for acquiring information content related to a communicable area identified by the identification information received by the identification information receiving part is not stored in the mobile terminal, the mobile terminal displays screen information indicating that it is possible to acquire the information content; at the acquisition request step, the mobile terminal sends the received identification information to the information providing server; and at the information content extracting step, the information providing server receives the identification information from the mobile terminal and extracts the information content associated with the received identification information from the one or more pieces of information content stored in the server in association with the identification information.

According to the present invention, the information providing method comprises: a server information extracting step of the information providing server extracting the acquisition request information associated with the identification information received from the mobile terminal from the one or more pieces of acquisition request information stored in the server in association with the identification information; a server information sending step of the information providing server sending the extracted acquisition request information to the mobile terminal; and an acquisition request information storage step of the mobile terminal newly storing the acquisition request information sent from the information providing server in the mobile terminal.

According to the present invention, the information providing method comprises: a sending history storage step of the information providing server storing sending history of the information content at the information content sending step in the information providing server; a sending history sending step of the information providing server sending the stored sending history to an information provision charging server connected to the information providing server; and a service use fee calculation step of, when receiving the sending history from the information providing server, the information providing charging server calculating an information delivery service use fee to be paid from a business entity developing business related to the information content to a business entity managing the information providing server, based on the received sending history.

According to the present invention, at the service use fee calculation step, the information provision charging server calculates the information delivery service use fee based on information indicating the number of times the information content has been sent at the information content sending step, the information being included in the sending history.

According to the present invention, at the service use fee calculation step, the information provision charging server calculates the information delivery service use fee based on the data amount of the information content.

According to the present invention, the information providing method comprises a network use fee calculation step of the network charging server connected to the network calculating a fee for use of the network to be paid from a user of the mobile terminal and the business entity managing the information providing server to a business entity managing the network, based on information indicating use condition of the network by the mobile terminal and the information providing server.

According to the present invention, when located within a communicable area of a wireless access point, a mobile terminal can easily acquire information content related to the communicable area.

### BRIEF DESCRIPTION OF THE DRAWINGS

FIG. 1 shows the configuration of an information providing system in an Embodiment 1 of the present invention;
FIG. 2 shows network connections in the information providing system of the Embodiment 1 of the present invention;
FIG. 3 is a flowchart showing the flow of an information delivery processing performed by the information providing system in the Embodiment 1 of the present invention;
FIG. 4 shows screen transition of a display section of a mobile terminal in the Embodiment 1 of the present invention, wherein (a) shows a waiting screen display shown by the display section when the mobile terminal is located outside a wireless access point; (b) shows a waiting screen display shown by the display section when the mobile terminal is located within the wireless access point; and (c) shows screen display of information content shown by the display section of the mobile terminal;
FIG. 5 shows an information delivery route and a use fee payment/receipt route in the information providing system in the Embodiment 1 of the present invention;
FIG. 6 is a flowchart showing the flow of a charging processing by an information provision charging server in the Embodiment 1 of the present invention;
FIG. 7 shows an example of a service use condition DB in the Embodiment 1 of the present invention;
FIG. 8 is a flowchart showing the flow of a charging processing by a network charging server in the Embodiment 1 of the present invention;
FIG. 9 shows the configuration of an information providing system in an Embodiment 2 of the present invention;
FIG. 10 shows information to be stored in an information storage section of the mobile terminal in the Embodiment 2 of the present invention;
FIG. 11 shows an access point list in the Embodiment 2 of the present invention;
FIG. 12 shows information to be stored in an information storage section of an information providing server in the Embodiment 2 of the present invention;
FIG. 13 shows an SSID list in the Embodiment 2 of the present invention;
FIG. 14 is a flowchart showing the flow of an information delivery processing by the information providing system in the Embodiment 2 of the present invention;
FIG. 15 is a flowchart showing the flow of an information delivery processing by the information providing system in the Embodiment 2 of the present invention;
FIG. 16 shows the configuration of an information providing system in the Embodiment 3 of the present invention;
FIG. 17 shows information to be stored in the information storage section of the information providing server in the Embodiment 3 of the present invention;
FIG. 18 shows an SSID list in the Embodiment 3 of the present invention;
FIG. 19 is a flowchart showing the flow of an information delivery processing by the information providing system in the Embodiment 3 of the present invention; and
FIG. 20 is a flowchart showing the flow of the information delivery processing by the information providing system in the Embodiment 3 of the present invention.

### DETAILED DESCRIPTION OF THE PREFERRED EMBODIMENTS

In embodiments of the present invention, when a mobile terminal enters an area where it can receive information, it displays notification to its user on the screen provided thereon to the effect that it has entered an area where information acquisition is possible. By the mobile terminal user operating the mobile terminal to select a predetermined area on the display by operating the mobile terminal, information is provided to the mobile terminal via a network.

Furthermore, in the embodiments of the present invention, when a mobile terminal connects to an access point (for example, a wireless LAN access point) via wireless communication, information having content associated with the access point is provided to the mobile terminal.

When wanting to provide information to a mobile terminal user, a business entity running a business at a place for example, a coffee shop, a restaurant or a retailer where an access point is installed (hereinafter referred to as an AP-installation-location business entity) makes setting by associating the access point with information which the business entity wants to provide.

In order to provide a user with information with content the user desires at a place he desires, an information provider designs an installation location of an access point on a network and sets a range within which connection to the wireless access point is possible, at an information providing server the information provider manages.

The information providing server then constructs a database in which information indicating the installation location of the access point and information that the AP-installation-location business entity wants to provide (hereinafter referred to as information content) are associated with each other.

After that, when a mobile terminal enters the area of the wireless access point, it displays notification on its screen that it is within the area of the wireless access point, and it becomes possible to acquire information associated with the area where the mobile terminal is currently located only by selecting the display.

### [Embodiment 1]

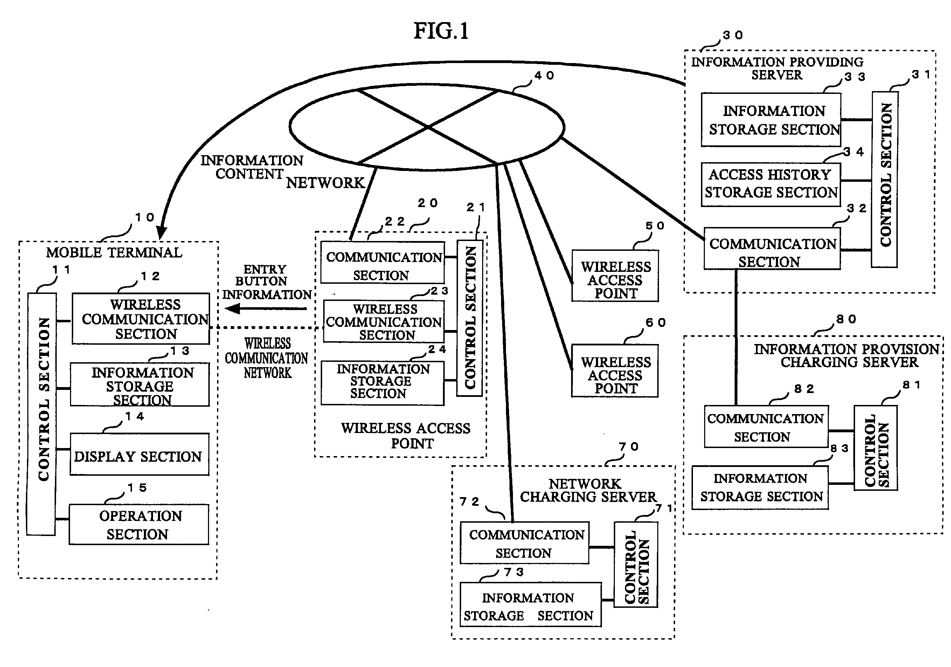

FIG. 1 shows the configuration of an information providing system in an Embodiment 1 of the present invention. The configuration and operation of the information providing system in this embodiment will be described below using FIG. 1.

As shown in FIG. 1, the information providing system is configured to comprise a mobile terminal 10, wireless access points 20, 50 and 60, an information providing server 30, a network 40, a network charging server 70 and an information provision charging server 80.

The wireless access points 20, 50 and 60, the information providing server 30, the network charging server 70 and the information provision charging server 80 are connected via network 40 (for example, the Internet). The mobile terminal 10 communicates with each wireless access point via a wireless communication network.

In this embodiment, the wireless communication method used between the mobile terminal 10 and the wireless access points 20, 50 and 60 may be wireless LAN or may be any other wireless communication method.

The mobile terminal 10 is an information processor capable of wireless communication and may be a portable terminal device such as a mobile phone, a personal handy-phone system (PHS), a personal digital assistant (PDA) or a notebook personal computer (PC). The mobile terminal 10 is operated by a mobile terminal user.

The mobile terminal 10 is configured to have a control section 11, a wireless communication section 12, an information storage section 13, a display section 14 and an operation section 15.

The control section 11 controls each portion of the mobile terminal 10, including the wireless communication section 12, the information storage section 13, the display section 14 and the operation section 15. The control section 11 may be configured to have a central processing unit (CPU) and an area for storing programs for causing the CPU to perform processings.

The wireless communication section 12 performs near-field wireless communication that does not require high-speed mobile communication, with the wireless access points 20, 50 and 60. The wireless communication section 12 can also perform wide-area wireless communication that enables high-speed mobile communication by dynamically making a selection from wireless base stations (not shown) arranged on the network 40 in advance.

The information storage section 13 is a portion for storing various information and may be realized by an electrically erasable and programmable read-only memory (EEPROM), for example.

The display section 14 displays/reproduces received information, information stored in the information storage section 13 and the like. For example, the display section 14 may be a liquid crystal display (LCD) or an organic electroluminescence (EL) display.

The operation section 15 is a portion for inputting information, which is configured by various key/switch groups.

The mobile terminal 10 may be provided with a voice output section (for example, a speaker: film type speaker) and a vibration generation section for vibrating the case of the mobile terminal 10, though they are not shown.

The wireless access points 20, 50 and 60 are communication apparatuses that function as connection points for connecting the mobile terminal 10 to the network 40. Each of the wireless access points is installed by an AP-installation-location business entity. The configuration and operation of the wireless access points 20, 50 and 60 are assumed to be the same. The configuration of the wireless access point 20 will be described here.

The wireless access point 20 is configured to have a control section 21, a communication section 22, a wireless communication section 23 and an information storage section 24.

The control section 21 controls each portion of the wireless access point 20, including the communication section 22, the wireless communication section 23 and the information storage section 24. The control section 21 may be configured to have a CPU and an area for storing programs for causing the CPU to perform processings.

The communication section 22 is a portion for sending and receiving information to and from the information providing server 30 via the network 40.

The wireless communication section 23 is a portion for sending and receiving information to and from the mobile terminal 10 via a wireless communication network.

The information storage section 24 is a portion for storing information to be sent to and received from the mobile terminal 10 and the information providing server 30. The information storage section 24 stores entry button information.

The entry button information is information for the mobile terminal 10 to acquire information content, which includes entry button screen information and address information.

The entry button screen information is screen information for the mobile terminal 10 to acquire information content and may be, for example, screen information of an entry button for requesting acquisition of information content, which is realized by a graphical user interface (GUI). The entry button screen information may show information with content related to the place where the wireless access point is installed (for example, a shop), such as the name of or advertisement for the shop.

The address information is information indicating a storage location of information content on the network 40, that is, a storage location in an information storage section 33 of the information providing server 30. For example, if the network 40 is the Internet, the address information may be a uniform resource locator (URL).

Though the entry button information is stored in the information storage section 24 in advance in this embodiment, it may be received and stored via the network 40 by each wireless access point.

For example, in the case where entry button information associated with each access point is stored in the information storage section 33 of the information providing server 30, the wireless access point may periodically inquire of the information providing server 30 via the network 40 whether or not the information providing server 30 holds entry button information associated with the wireless access point.

In this case, if holding the entry button information associated with the inquiring wireless access point, the information providing server 30 sends the corresponding entry button information to the inquiring wireless access point.

The wireless access point periodically inquires of the information providing server 30 even after acquisition of the entry button information. If entry button information for the inquiring wireless access point is newly stored in the information providing server 30, the information providing server 30 sends the newly stored entry button information to the inquiring wireless access point. Receiving the new entry button information, the wireless access point updates its stored entry button information with the new entry button information.

Furthermore, for example, in the case where entry button information associated with each wireless access point is stored in the information storage section 33 of the information providing server 30, when entry button information associated with a wireless access point is newly stored in the information providing server 30, the information providing server 30 may send the newly stored entry button information to the appropriate wireless access point via the network 40.

After the wireless access point acquires the entry button information, the information providing server 30 sends, each time entry button information is newly stored therein, the newly stored entry button information to an appropriate wireless access point. Receiving new entry button information, the wireless access point updates its stored entry button information with the new entry button information.

Though entry button information is stored in the information providing server 30 in the above embodiment, the entry button information may be stored in any other apparatus connected to the network 40 and having a communication function. In this case also, an access point may acquire entry button information by inquiring of the apparatus having a communication function, or the apparatus having a communication function may send, each time entry button information is newly stored therein, the entry button information to a wireless access point.

The information providing server 30 is an information processor provided with a function of providing information in response to an information acquisition request from the mobile terminal 10, and may be a high-end PC such as a workstation, for example. The information providing server 30 is managed by an information provider.

The information providing server 30 is configured to have a control section 31, a communication section 32, an information storage section 33 and an access history storage section 34.

The control section 31 controls each portion of the information providing server 30, including the communication section 32, the information storage section 33 and the access history storage section 34. The control section 31 may be configured to have a CPU and an area for storing programs for causing the CPU to perform processings.

The communication section 32 is a portion for sending and receiving information to and from the wireless access points 20, 50 and 60 via the network 40.

The information storage section 33 is a portion for storing information to be sent and received via the network 40. The information storage section 33 stores information content together with an information content ID, which is identification information for identifying each information content. The information content may show the content of and advertisement for a business such as running of a shop developed by an AP-installation-location business entity within the area of a wireless access point installed by the AP-installation-location business entity.

The access history storage section 34 stores the number of times a request to acquire information content stored in the information storage section 33 is received by the communication section 32 (or the number of times the information content is sent in response to an acquisition request) is stored for each information content for each information content ID.

The network charging server 70 is an information processor managed by a network business entity such as an Internet service provider (ISP), and may be realized by a high-end PC such as a workstation. The network charging server 70 performs a charging processing for a fee for use of the network 40 by a mobile terminal user or an information provider.

The network charging server 70 is configured to have a control section 71, a communication section 72 and an information storage section 73.

The control section 71 controls each portion of the network charging server 70, including the communication section 72 and the information storage section 73. The control section 71 may be configured to have a CPU and an area for storing programs for causing the CPU to perform processings.

The control section 71 calculates a fee for use of the network 40 to be paid from a mobile terminal user or an information provider to the network business entity.

The communication section 72 receives information indicating condition of use of the network 40 (hereinafter referred to as network use condition information) from the information providing server 30 and an ISP server (not shown) via the network 40.

In this case, the ISP server is an information processor managed by a network business entity such as an ISP, and may be realized by a high-end PC such as a workstation, for example. Receiving a network connection request from a mobile terminal 10, the ISP server connects the mobile terminal 10 to the network 40.

The information storage section 73 is a portion for storing network use condition information received via the network 40 and network use fee information calculated by the control section 71.

The information provision charging server 80 is an information processor managed by an information provider, and may be realized by a high-end PC such as a workstation, for example. The information provision charging server 80 calculates an information delivery service use fee to be paid from an AP-installation-location business entity to an information provider. In this case, the information delivery service is a network service of the information providing server 30 delivering information content related to the business of the AP-installation-location business entity.

The information provision charging server 80 is configured to have a control section 81, a communication section 82 and an information storage section 83.

The control section 81 controls each portion of the information provision charging server 80, including the communication section 82 and the information storage section 83. The control section 81 may be configured to have a CPU and,an area for storing programs for causing the CPU to perform processings. The control section 81 calculates an information delivery service use fee.

The communication section 82 is connected to the communication section 32 of the information providing server 30 via a network. The communication section 82 receives service use condition information indicating the condition of use of the information delivery service by a mobile terminal user from the information providing server 30.

The information storage section 83 stores the service use condition information about each mobile terminal user received from the communication section 82 and the service use fee information calculated by the control section 81.

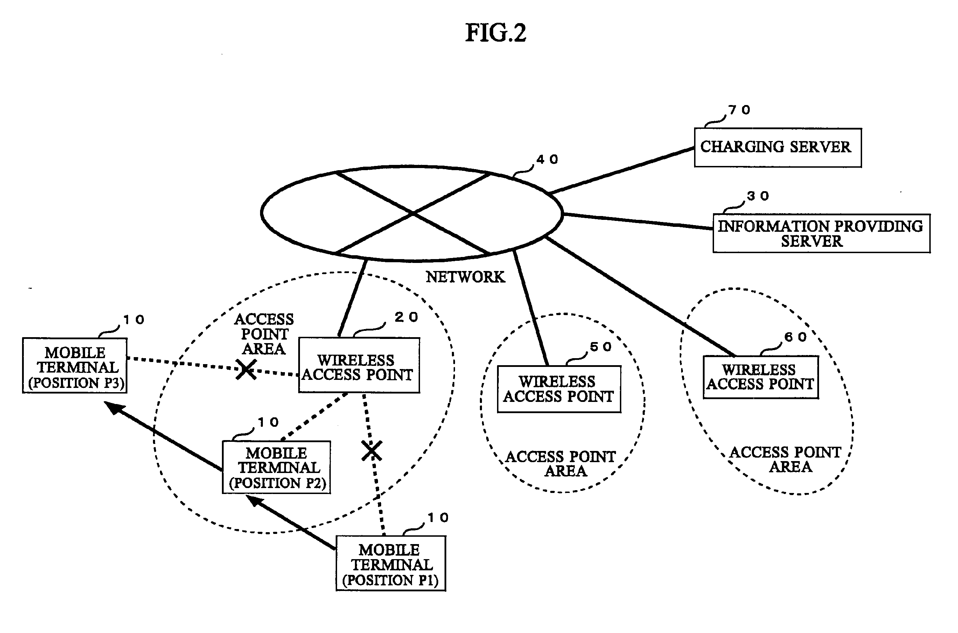

FIG. 2 shows network connections in the information providing system of the Embodiment 1 of the present invention.

As shown in FIG. 2, a mobile terminal 10 is assumed to move from position P1 to P2, and then to P3 in that order.

At the position P1, the mobile terminal 10 is located outside the access point area (outside the communicable area) of the wireless access point 20. Therefore, wireless communication is not established and the mobile terminal 10 is not connected to the network 40. In this case, the display section 14 of the mobile terminal 10 does not the show screen display indicating that information content can be acquired.

When the mobile terminal 10 moves from position P1 to position P2, wireless communication is established because the mobile terminal had entered the access point area (the communicable area), and the mobile terminal 10 is connected to the network 40. In this case, the display section 14 of the mobile terminal 10 shows screen display indicating that information content can be acquired.

When the mobile terminal 10 moves from position P2 to position P3, it gets out of the access point area, and therefore wireless communication cannot be established. In this case, the display section 14 of the mobile terminal 10 eliminates screen display indicating that information content can be acquired, which has been shown when the mobile terminal was in the access point area.

According to this embodiment, an access point area is an area around a wireless access point with a radius of dozens of meters to 100 meters in which a user can move on foot in a several minutes.

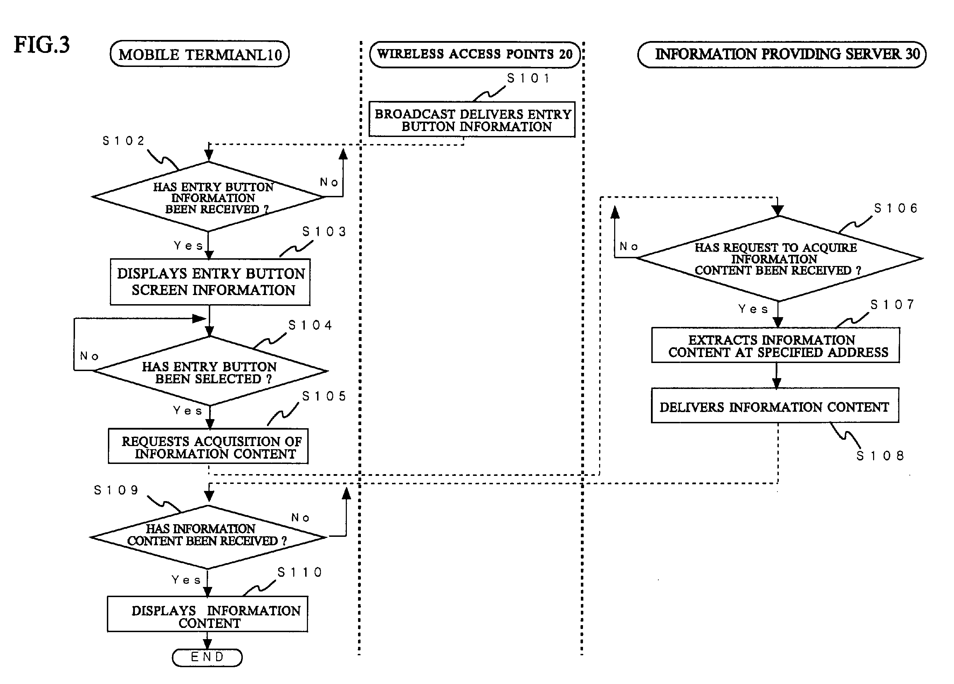

FIG. 3 is a flowchart showing the flow of an information delivery processing performed by the information providing system in the Embodiment 1 of the present invention. Description will be made below on the information delivery processing by the information providing system in this embodiment, along the flowchart of FIG. 3 and with reference to FIG. 1.

First, the wireless communication section 23 of the wireless access points 20 broadcast delivers entry button information in its access point area (step S101).

The control section 11 of the mobile terminal 10 determines whether the entry button information has been received by the wireless communication section 12 (step S102).

If the mobile terminal 10 is located within the wireless access point area and it is determined that the entry button information has been received (step S102: Yes), then the display section 14 displays entry button screen information included in the received entry button information (step S103).

When displaying the entry button screen information, the mobile terminal 10 may output a voice for notifying the mobile terminal user that it has entered the wireless access point area, or it may vibrate the case to notify that it has entered the area.

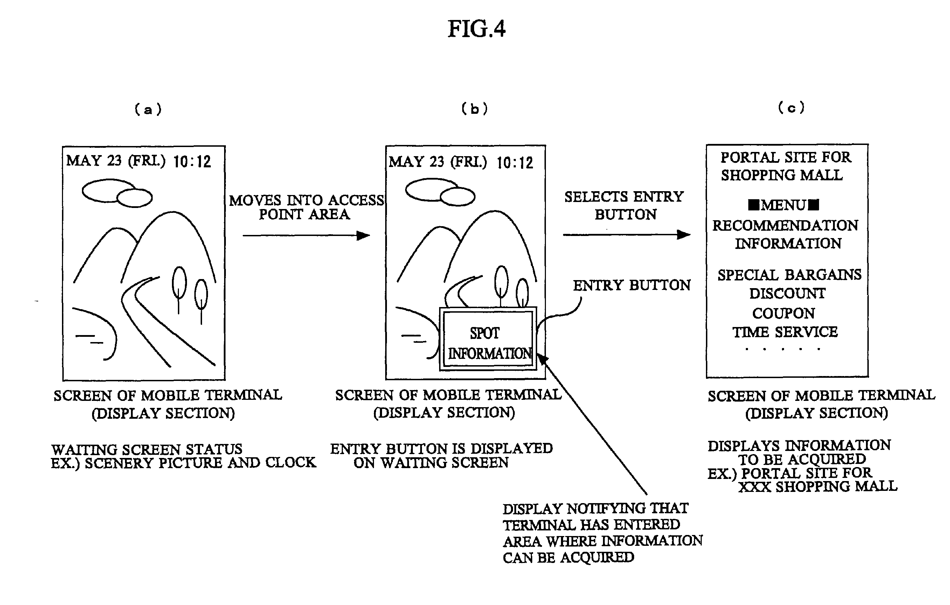

FIG. 4 shows screen transition of the display section 14 of the mobile terminal 10 in the Embodiment 1 of the present invention. FIG. 4 (a) shows a waiting screen display shown by the display section 14 when the mobile terminal 10 is located outside a wireless access point; (b) shows a waiting screen display shown by the display section 14 when the mobile terminal 10 is located within the wireless access point; and (c) shows screen display of information content by the display section 14 of the mobile terminal 10.

As shown in FIG. 4 (a) and (b), when the mobile terminal 10 moves into the access point area of the wireless access point 20 from outside the access point area, the wireless communication section 12 receives entry button information which is broadcast delivered from the wireless access point 20, and the display section 14 displays the received entry button (a box with "Spot Information" thereon in the case of FIG. 4 (b)).

In FIG. 4 (a), since the mobile terminal 10 is outside the access point area, the display is not shown.

Then, when the mobile terminal user operates the operation section 15 to select the entry button on the screen (step S104: Yes), the wireless communication section 12 sends a request to acquire information content to the address of an information content delivery source that has been received together with the entry button screen information (that is, the address referring to the inside of an information providing server) (step S105).

When the communication section 32 of the information providing server 30 receives the request to acquire information content from the mobile terminal 10 (step S106: Yes), the control section 31 extracts information content at the address specified by the acquisition request from the information storage section 33 (step S107).

The communication section 32 then delivers the extracted information content to the mobile terminal 10 (step S108).

When the wireless communication section 12 of the mobile terminal 10 receives the delivered information content (step S109: Yes), the information storage section 13 stores the received information content. Then, the display section 14 displays the received information content (step S110).

FIG. 4 (c) shows an example of display by the display section 14, of the received information content. By further making a selection from various items (displayed by GUI and the like) such as "Recommendation Information" and "Special Bargains" shown in the information content, the mobile terminal 10 can acquire other information content (such as web pages) stored in the information providing server 30.

In this way, the mobile terminal user acquires information content specific to the wireless access point 20, within the access point area where he is located. Thus, it is possible for the terminal mobile user to easily acquire information about shops and the like in the neighborhood of the position where he is currently located.

The control section 11 may generate an entry button list, information indicating a list of entry button information stored in the information storage section 13 and the information storage section 13 may store the list.

In this case, by the mobile terminal user operating the operation section 15 to display the entry button list on the display section 14 and selecting entry button information for information content he wants to acquire from the list, the display section 14 displays the selected entry button screen information.

Thus, it is possible for the mobile terminal user to acquire information content he desires even if he moves out of the wireless access point 20.

The request to acquire information content and the information content may be sent and received via a wireless access point or via a base station (not shown) of the network 40.

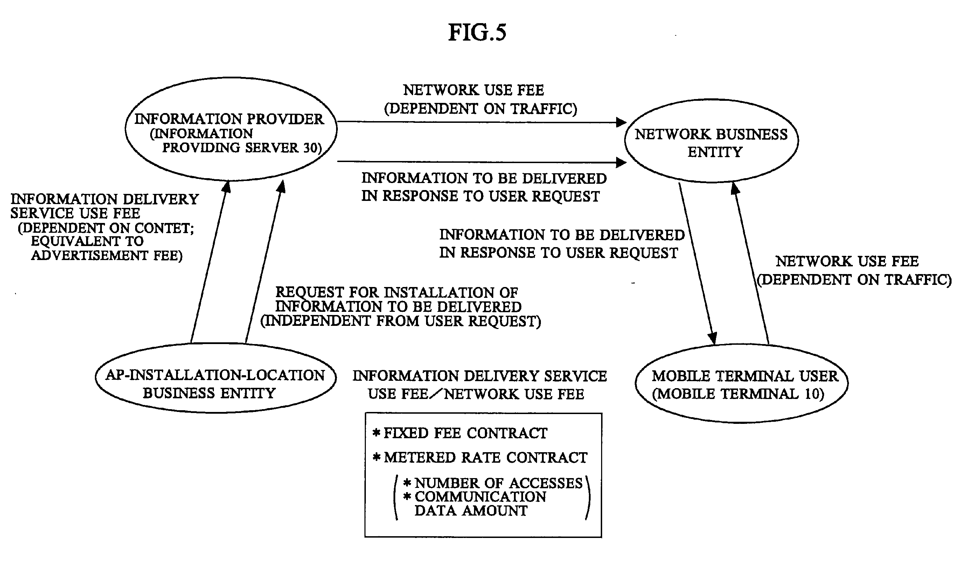

FIG. 5 shows an information delivery route and a use fee payment/receipt route in the information providing system in the Embodiment 1 of the present invention. Delivery of information content and payment/receipt of a use fee will be described below using FIG. 5.

An AP-installation-location business entity installs a wireless access point at a place where the entity runs his business. For example, the AP-installation-location business entity installs a wireless access point so that a shop that the business entity runs is located within the area of the wireless access point.

Furthermore, the AP-installation-location business entity requests an information provider to create information content which the business entity wants to provide to mobile terminal users via the wireless access point in a data format which can be delivered to mobile terminals (for example, in HTML) and hold them in the information providing server 30.

The AP-installation-location business entity may create information content using an information processor such as a PC and send them to the information providing server 30 via a network.

Alternatively, the AP-installation-location business entity may use an information processor to send a request of creation of information content related to the business the business entity runs to an information processor (such as a PC) of an information provider. In this case, the information provider creates the requested information content using an information processor and registers the created information content with the information providing server 30 connected via a network.

The information provision charging server 80 charges an information delivery service use fee (a fee for use of information content management/delivery services by the information providing server 30) to be paid from the AP-installation-location business entity to the information provider.

When information content the delivery of which has been requested by the AP-installation-location business entity is registered with the information storage section 33 of the information providing server 30, the information provider operates an information processor (such as a PC) connected to the information provision charging server 80 to set and input a fee structure for use of the information delivery service for the registered information content. Information indicating the fee structure for the service use fee is stored in the information storage section 83 for each information content.

A fixed fee system may be employed in which a fee is fixed for a predetermined period, such as a certain amount of yen per month. In addition, the fixed service use fee may be set higher as the data amount of the information content increases.

The service use fee structure may be a metered rate structure in which a fee depends on the number of accesses to information content from the mobile terminal 10. Furthermore, the service use fee structure may be such that a fee depends on a value obtained by multiplying the number of accesses by the data amount of information content.

The network charging server 70 charges a network use fee (a fee for use of connection to the network 40) to be paid from an information provide or a mobile terminal user to a network business entity.

When having concluded a contract for use of the network 40 with a mobile terminal user or an information provider, a network business entity operates an information processor (such as PC) connected to the network charging server 70 to set and input a network use fee structure. Information indicating the network use fee structure is stored in the information storage section 73 for each user or business entity.

A fixed fee system may be employed for the network use fee structure, in which a fee is fixed for a predetermined period, such as 1 month XX dollars (xx yen).

A metered rate may be employed which depends on the condition of use of the network 40 by each user or business entity.

A fixed fee contract and a metered rate contract may be independently applicable to each of the three fees of the information delivery service use fee, the network use fee paid from an information provider to a network business entity, and the network use fee paid from a mobile terminal user to a network business entity.

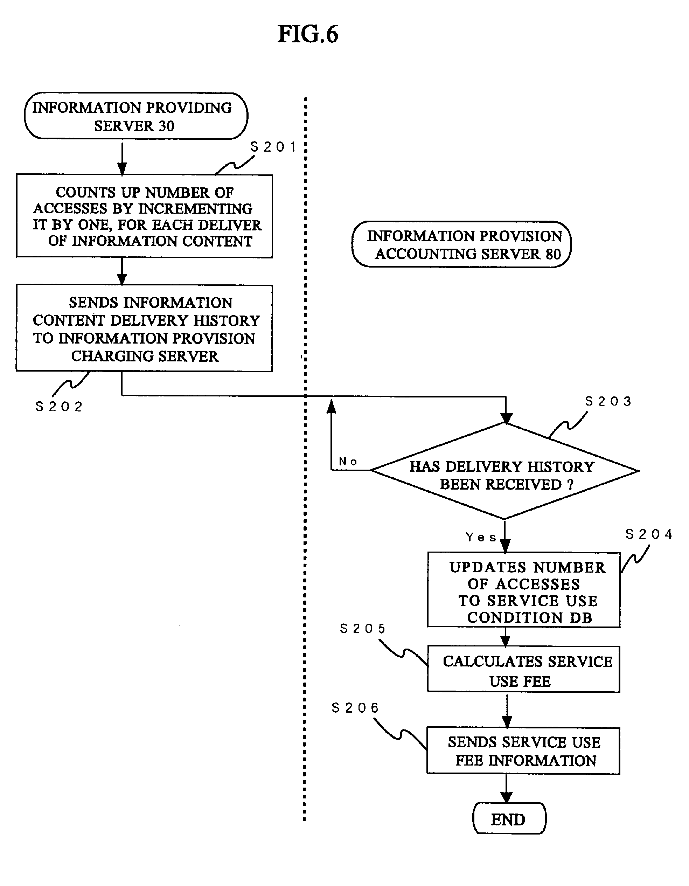

FIG. 6 is a flowchart showing the flow of a charging processing by the information provision charging server 80 in the Embodiment 1 of the present invention. Description will be made below on the charging processing to be performed by the information provision charging server 80 in the case where a service use fee is determined based on a metered rate structure, along the flowchart of FIG. 6.

First, the control section 31 of the information providing server 30 counts up the number of deliveries by incrementing it by one each time it delivers information content to the mobile terminal 10 in response to an acquisition request of the mobile terminal 10, and writes the number as the number of accesses in the access history storage section 34 for each information content (step S201).

Then, the communication section 32 of the information providing server 30 sends information content delivery history to the information provision charging server 80, for example, periodically (step S202).

In this case, the information content delivery history is assumed to include at least an information content ID for identifying each information content and information indicating the number of accesses to information content identified by the ID.

When the communication section 82 of the information provision charging server 80 receives the information content delivery history (step S203: Yes), the control section 81 writes the value of the number of accesses included in the received delivery history to a service use condition database (hereinafter referred to as a service use condition DB) managed by the information storage section 83 based on the information content ID which is also included in the delivery history.

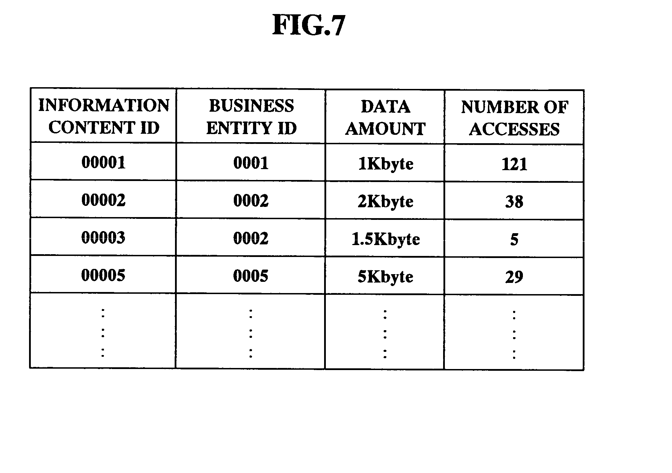

FIG. 7 shows an example of the service use condition DB in the Embodiment 1 of the present invention. In the service use condition DB, for each information content, the ID of the information content, the ID of an AP-installation-location business entity that requested delivery of the information content, the data amount of the information content and the number of accesses to the information content are managed, as shown in FIG. 7.

The control section 81 calculates a service use fee with reference to the service use condition DB, for example, periodically (step S205).

For example, the control section 81 may calculate the service use fee by multiplying a basic fee which is a base for the fee by the number of accesses or may calculate the service use fee by further multiplying the value obtained by multiplying the basic fee by the number of accesses, by a coefficient based on the data amount of the information content.

It is assumed that information indicating the basic fee and the coefficient based on the data amount described above is stored in the information storage section 83 in advance and the control section 81 uses the information to calculate the service use fee. A larger number is assumed to be set as the above coefficient as the data amount is larger.

The information provision charging server 80 then sends the calculated fee information to a server and the like managed by a financial institution to request payment of the fee, and finishes the processing (step S206).

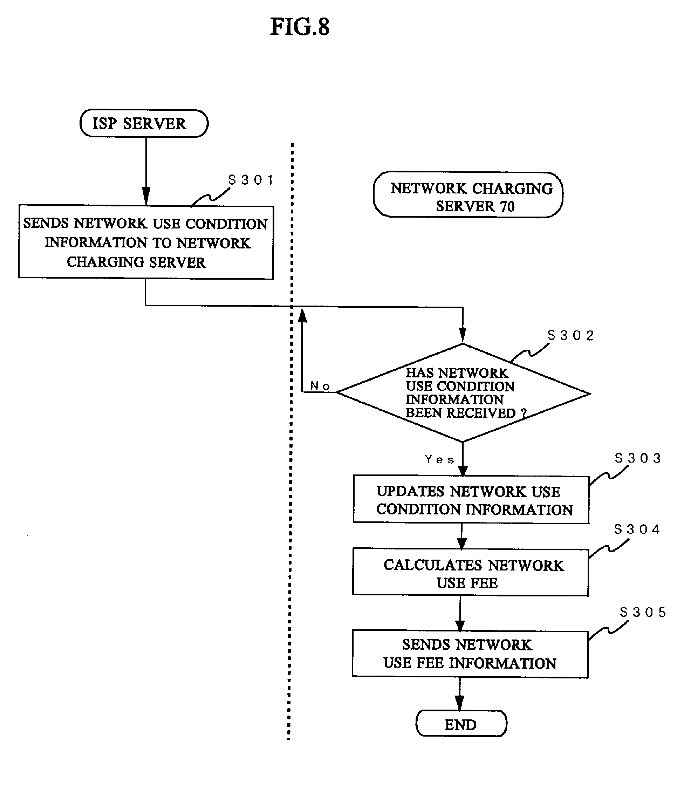

FIG. 8 is a flowchart showing the flow of a charging processing by the network charging server 70 in the Embodiment 1 of the present invention. Description will be made below on the charging processing to be performed by the network charging server 70 in the case where a network use fee is determined based on a metered rate structure, along the flowchart of FIG. 8.

First, an ISP server sends information about use of the network 40 by a mobile terminal user or an information provider together with a user ID for identifying each user or business entity to the network charging server 70 via a network, for example, periodically (step S301).

The network use condition information includes at least a network utilizing equipment ID for identifying equipment (such as the mobile terminal 10 and the information providing server 30) which utilized the network 40. The network use condition information may include information indicating the data amount of information (including an information acquisition request, information content, entry button information and the like) sent by the mobile terminal 10 or the information providing server 30 with the use of the network 40 or the time required for connection to the network 40 by the mobile terminal 10 or the information providing server 30.

When the communication section 72 of the network charging server 70 receives the network use condition information (step S302: Yes), the control section 71 writes the received network use condition information to the information storage section 73 based on the user ID received at the same time (step S303).

Then, the control section 71 calculates a network use fee based on the network use condition information in the information storage section 73, for example, periodically (step S304).

For example, the control section 71 may calculate the network use fee by adding a fee dependent on the network use condition to a basic fee which is a base for the fee.

It is assumed that information indicating the above-mentioned fee dependent on the network use condition is stored in the information storage section 83 in advance and the control section 81 uses the information to calculate a network use fee.

A larger number is assumed to be set as information indicating the above-mentioned fee dependent on the use condition as the data amount of information sent with the use of the network 40 is larger and the time required for connection to the network 40 is longer.

Then, the network charging server 70 sends the calculated fee information to a server and the like managed by a financial institution to request payment of the fee, and finishes the processing (step S305).

Though an AP-installation-location business entity that runs its business at a place located within a wireless access point area installs the wireless access point in this embodiment, any other business entity may install the wireless access point.

For example, a specialized AP installer that runs an intermediary service business between an entity that develops a business such as running a shop (hereinafter referred to a business developing entity) and an information provider may install a wireless access point.

The specialized AP installer is a business entity specialized in installation of wireless access points. When the specialized AP installer accepts an order for use of an information content delivery service from one or more business entities developing businesses within the area of a wireless access point installed by the specialized AP installer, the specialized AP installer places an order for the received order to an information provider.

Specifically, when an information processor operated by a specialized AP installer receives a request to use a delivery service (which may be accompanied with information content the delivery of which is desired) from an information processor of a business developing entity via a network, it may send the received use request to the information providing server 30.

An information provider running an information content delivery business may install a wireless access point. In this case, the information provider requests a business developing entity to provide a place for installation of a wireless access point on condition that it performs network delivery of information content related to the business of the business developing entity.

A network business entity running a business of providing use of the network 40 may install a wireless access point. In this case, the network business entity requests a mobile terminal user (or an organization to which the user belongs) to provide a place for installation of a wireless access point on condition that it provides more satisfactory network services (such as a capability of using a wireless LAN) for the mobile terminal user (or the organization to which the user belongs).

There may exist an AP aggregator that runs an intermediary business between one or more business developing entities and an information provider by aggregating wireless access points installed by the one or more business developing entities.

The AP aggregator is an entity that runs a business of brokering an information delivery service of an information provider when a business developing entity wants to deliver information within the area of a wireless access point installed by the business developing entity.

It is possible for the AP aggregator to develop network services and information providing services specific to the AP aggregator within the areas of the one or more aggregated wireless access points.

As described above, according to this embodiment, it is possible for an AP-installation-location business entity to appropriately provide information content that the AP-installation-location business entity wants to provide to a mobile terminal user at a place where its wireless access point 20 is installed.

The reason is that the wireless access point 20 and the information providing server 30 for delivering information content dependent on the place where the wireless access point 20 is installed are arranged on the network 40.

Furthermore, according to this embodiment, it is possible for a mobile terminal user to acquire information content dependent on the place where the wireless access point 20 is installed with an easy operation procedure.

The reason is that, when the mobile terminal 10 enters a wireless access point area, an entrance display (entry button) to information content associated with the wireless access point is displayed on the display section 14 of the mobile terminal 10.

### [Embodiment 2]

Description will be now made on the assumption that the configuration and operation of an Embodiment 2 of the present invention are the same as in the Embodiment 1 unless otherwise specified. In this embodiment, the wireless communication method used between the mobile terminal 10 and the wireless access points 20, 50 and 60 is assumed to be a wireless LAN.

An access point area is an area around a wireless access point with a radius of dozens of meters to 100 meters the same as in the Embodiment 1.

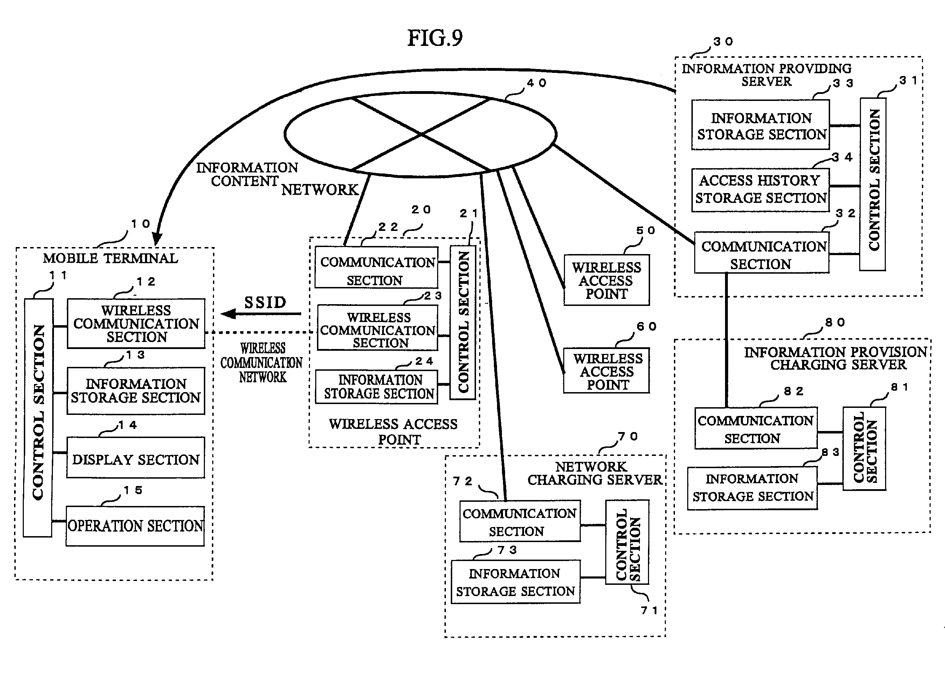

FIG. 9 shows the configuration of an information providing system in the Embodiment 2 of the present invention. Those denoted by the same reference numerals as in the information providing system of the Embodiment 1 shown in FIG. 1 are assumed to have the same configuration and perform the same operation unless otherwise specified.

In the Embodiment 1, the wireless access point 20 broadcast delivers entry button information within its access point area. In contrast, in this embodiment, a service set ID (SSID), an identifier for identifying each access point, is stored in the information storage section 24 of each wireless access point as shown in FIG. 9, and the wireless communication section 23 broadcast delivers the SSID within its access point area.

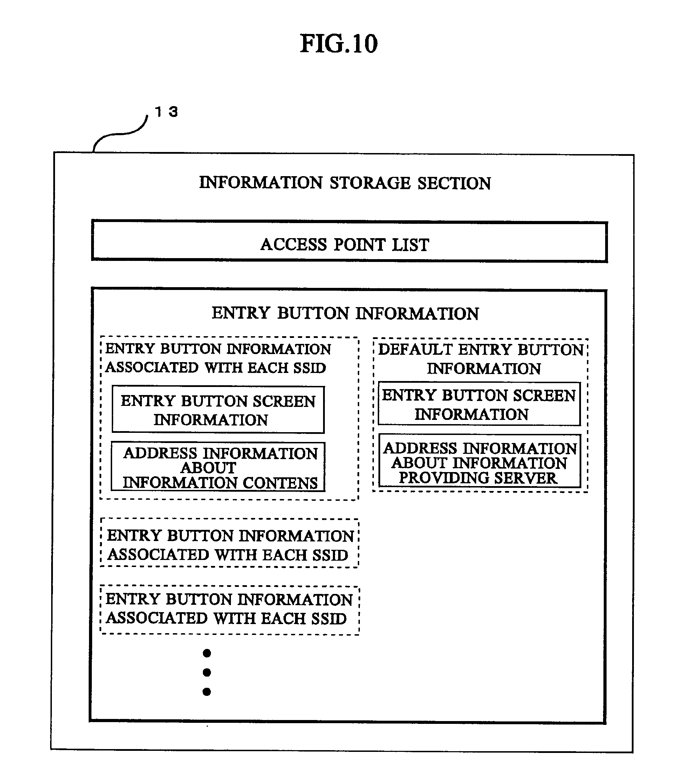

FIG. 10 shows information to be stored in the information storage section 13 of the mobile terminal 10 in the Embodiment 2 of the present invention. As shown in FIG. 10, an access point list and entry button screen information is stored in the information storage section 13.

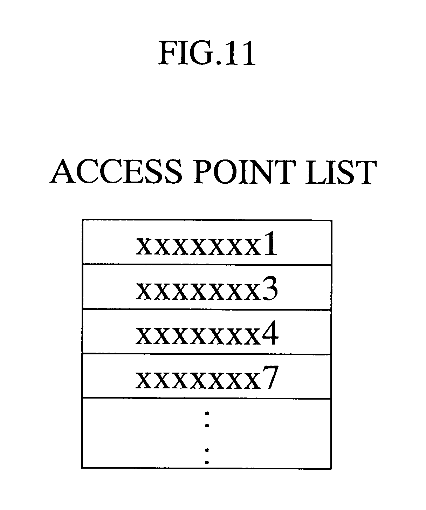

FIG. 11 shows the access point list in the Embodiment 2 of the present invention. As shown in FIG. 11, the access point shows a list of one or more SSIDs.

The mobile terminal 10 may download and acquire the access point list from the information providing server 30 by sending an acquisition request to the information providing server 30 via the network 40.

As shown in FIG. 10, the entry button information to be stored in the information storage section 13 includes one ore more pieces of entry button information each of which corresponds to each SSID in the access point list and default entry button information corresponding to SSIDs that do not exist in the access point list.

The one or more entry button information each of which corresponds to each SSID includes entry button screen information and address information indicating the storage location of information content the same as in the Embodiment 1.

The entry button screen information associated with an SSID in the access point list may show information related to the place (for example, a shop) where the wireless access point having broadcast delivered the SSID is installed, such as the name of or advertisement for the shop, the same as in the Embodiment 1.

The default entry button information includes entry button screen information and address information indicating the address of the information providing server 30.

The default entry button screen information may show only an entry button.

The default address information is not an address indicating a storage location of information content but simply an address on the network 40, of the information providing server 30.

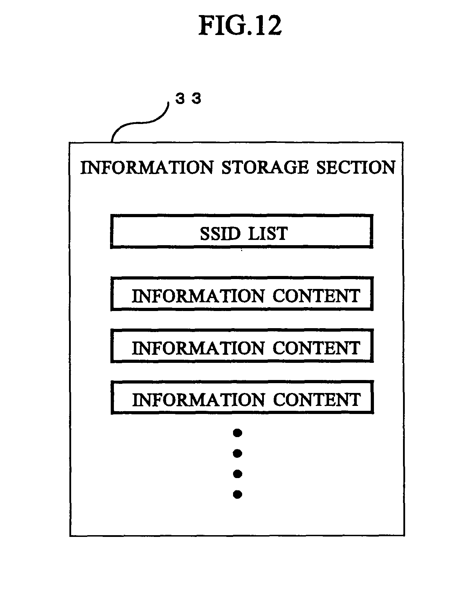

FIG. 12 shows information to be stored in the information storage section 33 of the information providing server 30 in the Embodiment 2 of the present invention. As shown in FIG. 12, information content related to the place where each wireless access point is installed and an SSID list are stored in the information storage section 33 of the information providing server 30 the same as in the Embodiment 1.

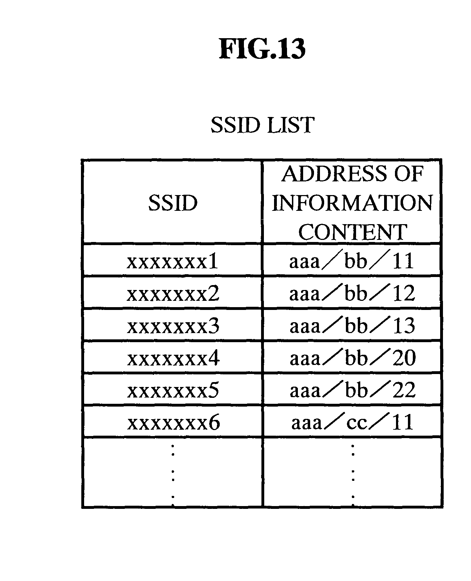

FIG. 13 shows the SSID list in the Embodiment 2 of the present invention. As shown in FIG. 13, the SSID list is a table in which each SSID and address information indicating the storage location in the information providing server 30 of information content corresponding to each SSID are associated with each other.

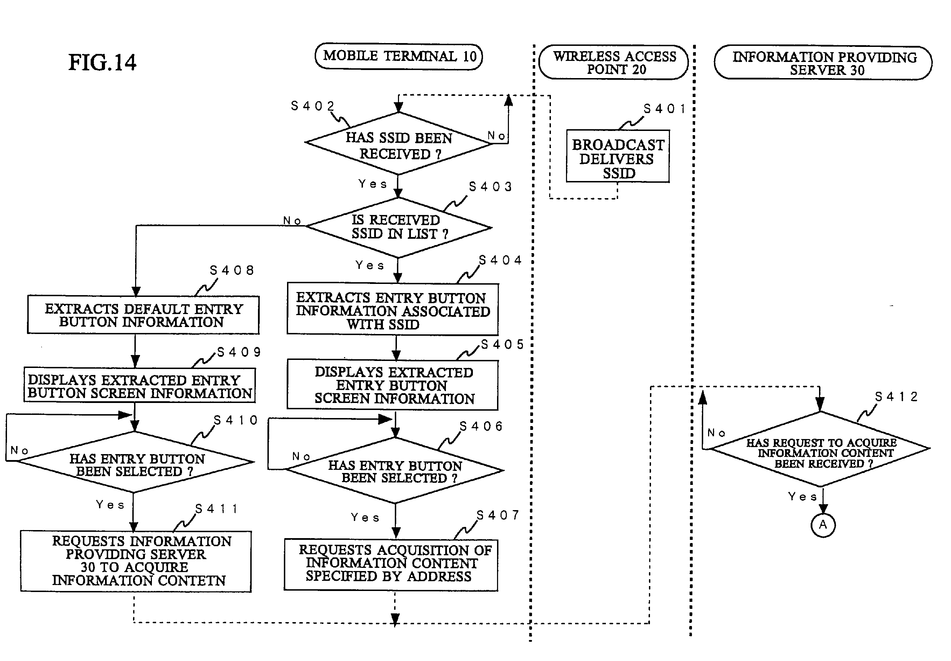

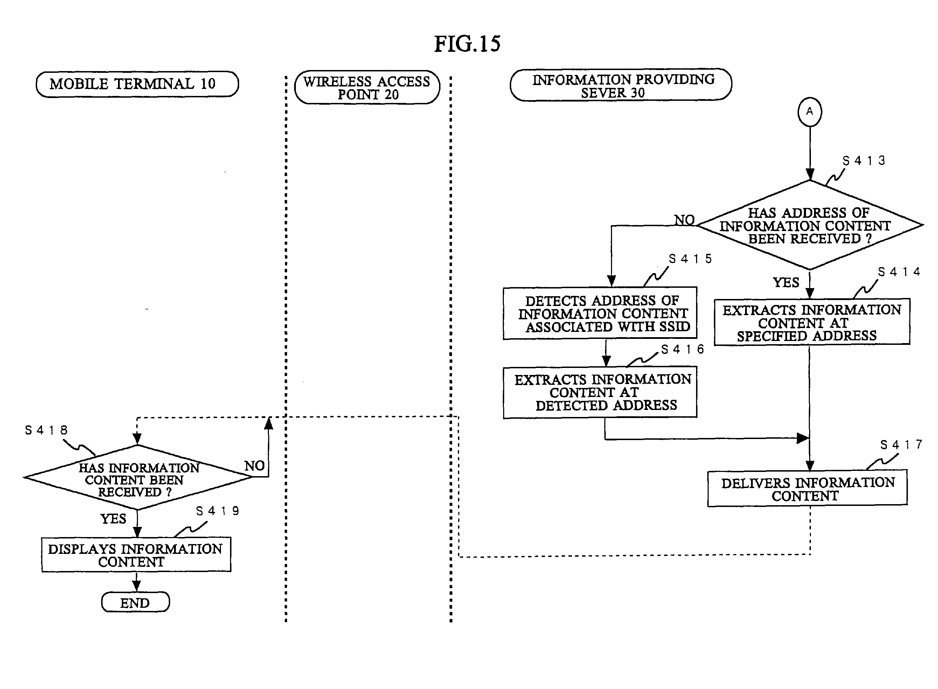

FIGS. 14 and 15 are flowcharts showing the flow of an information delivery processing by the information providing system in the Embodiment 2 of the present invention. Description will be made below on the information delivery processing by the information providing system in this embodiment, along the flowcharts of FIGS. 14 and 15 and with reference to FIG. 9.

First, the wireless communication section 23 of the wireless access point 20 broadcast delivers an SSID within the area of the access point 20 (step S401).

The control section 11 of the mobile terminal 10 determines whether or not the SSID has been received by the wireless communication section 12 (step S402).

If the mobile terminal 10 is located within the wireless access point area and it is determined that the SSID has been received (step S402: Yes), then the control section 11 refers to the access point list in the information storage section 13 and determines whether or not there exists an SSID associated with the received SSID in the access point list (step S403).

If it is determined that there exists an SSID associated with the received SSID in the access point list (step S403: Yes), then the control section 11 extracts entry button screen information associated with the corresponding SSID from the information storage section 13 (step S404).

Then, the display section 14 displays the extracted entry button screen information (step S405).

Then, when the mobile terminal user operates the operation section 15 to select the entry button on the screen (step S406: Yes), the wireless communication section 12 sends a request to acquire information content to the address of the storage location of information content, which is shown in the address information associated with the entry button screen information (that is, the address referring to the inside of an information providing server) (step S407).

On the contrary, if it is determined that there is no SSID associated with the received SSID in the access point list (step S403: No), then the control section 11 extracts default entry button screen information from the information storage section 13 (step S408).

Then, the display section 14 displays the extracted default entry button screen information (step S409).

Then, when the mobile terminal user operates the operation section 15 to select the entry button on the screen (step S410: Yes), the wireless communication section 12 sends a request to acquire information content to the address associated with the default entry button screen information (that is, to the information providing server 30) together with the SSID received from the wireless access point 20 (step S411).

When the communication section 32 of the information providing server 30 receives the request to acquire information content from the mobile terminal 10 (step S412: Yes), the control section 31 determines whether or not the address information indicating the storage location of information content has been received by the communication section 32 together with the acquisition request (step S413).

If it is determined that the address information indicating the storage location of information content has been received together with the acquisition request (step S413: Yes), then the control section 31 extracts the information content specified by the address information from the information storage section 33 (step S414).

If it is determined that the address information indicating the storage location of information content has not been received together with the acquisition request (step S413: No), then the control section 31 refers to the SSID list in the information storage section 33 to detect an address of information content associated with the SSID received together with the acquisition request (step S415).

Then, the control section 31 extracts appropriate information content from the information storage section 33 based on the detected address (step S416).

Then, the communication section 32 delivers the extracted information content to the mobile terminal 10 (step S417).

When the wireless communication section 12 of the mobile terminal 10 receives the delivered information content (step S418: Yes), the information storage section 13 stores the received information content. Then, the display section 14 displays the received information content (step S419).

In this way, the mobile terminal user acquires information content specific to the wireless access point 20, within an access point area where he is located. Thus, it is possible for the terminal mobile user to easily acquire information about shops and the like in the neighborhood of the position he is currently located.

As described above, according to this embodiment, the mobile terminal 10 receives from a wireless access point an SSID specific to the access point, reads entry button screen information associated with the received SSID from within the mobile terminal itself, and displays it.

Furthermore, if the mobile terminal 10 does not hold entry button information associated with the received SSID, it sends the SSID together with an acquisition request to the information providing server 30. The information providing server 30 sends information content associated with the SSID received from the mobile terminal 10 to the mobile terminal 10.

As described above, the mobile terminal 10 acquires information content from the information providing server 30 using entry button information stored in itself in advance, so that the amount of data communicated between the mobile terminal 10 and a wireless access point can be reduced.

### [Embodiment 3]

Description will be now made on the assumption that the configuration and operation of an Embodiment 3 of the present invention are the same as in the Embodiment 2 unless otherwise specified.

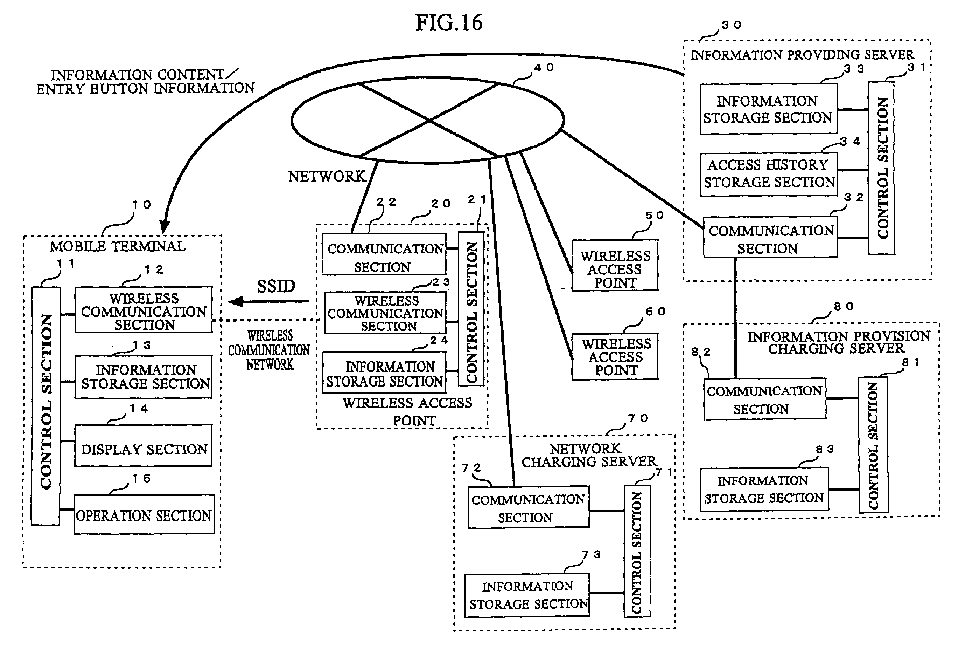

FIG. 16 shows the configuration of an information providing system in the Embodiment 3 of the present invention. Those denoted by the same reference numerals as in the information providing system of the Embodiment 2 shown in FIG. 9 are assumed to have the same configuration and perform the same operation unless otherwise specified.

In the Embodiment 2, if receiving an SSID from the mobile terminal 10, the information providing server 30 extracts information content associated with the received SSID and delivers it to the mobile terminal 10. In contrast, in this embodiment, if receiving an SSID from the mobile terminal 10, the information providing server 30 not only extracts information content the same as in the Embodiment 2 but also extracts entry button information associated with the received SSID, and delivers the extracted information content and entry button information to the mobile terminal 10.

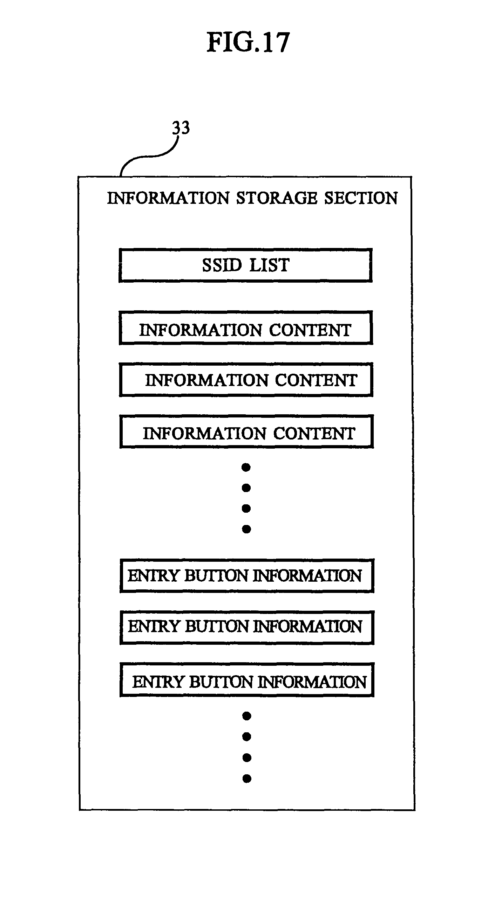

FIG. 17 shows information to be stored in the information storage section 33 of the information providing server 30 in the Embodiment 3 of the present invention. As shown in FIG. 17, in addition to information content related to the installation place of each wireless access point and an SSID list, entry button information associated with each information content is also stored in the information storage section 33 of the information providing server 30.

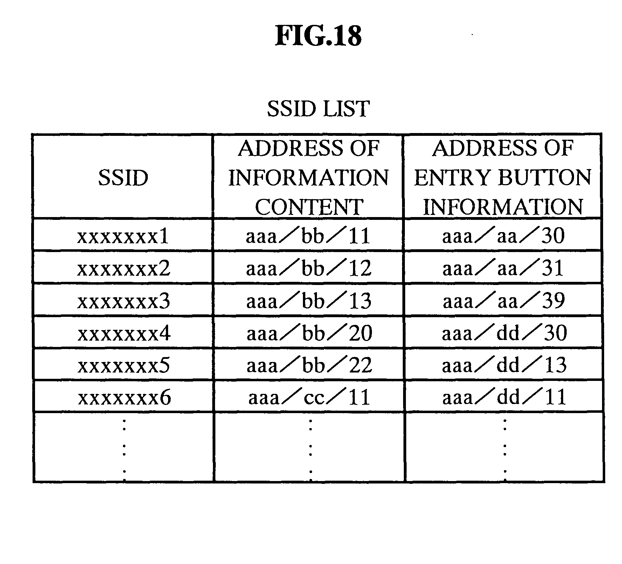

FIG. 18 shows the SSID list in the Embodiment 3 of the present invention. As shown in FIG. 18, the SSID list in this embodiment is a table in which each SSID, address information indicating the storage location in the information providing server 30 of information content corresponding to each SSID and address information indicating the storage location in the information providing server 30 of entry button information corresponding to each SSID are associated with one another.

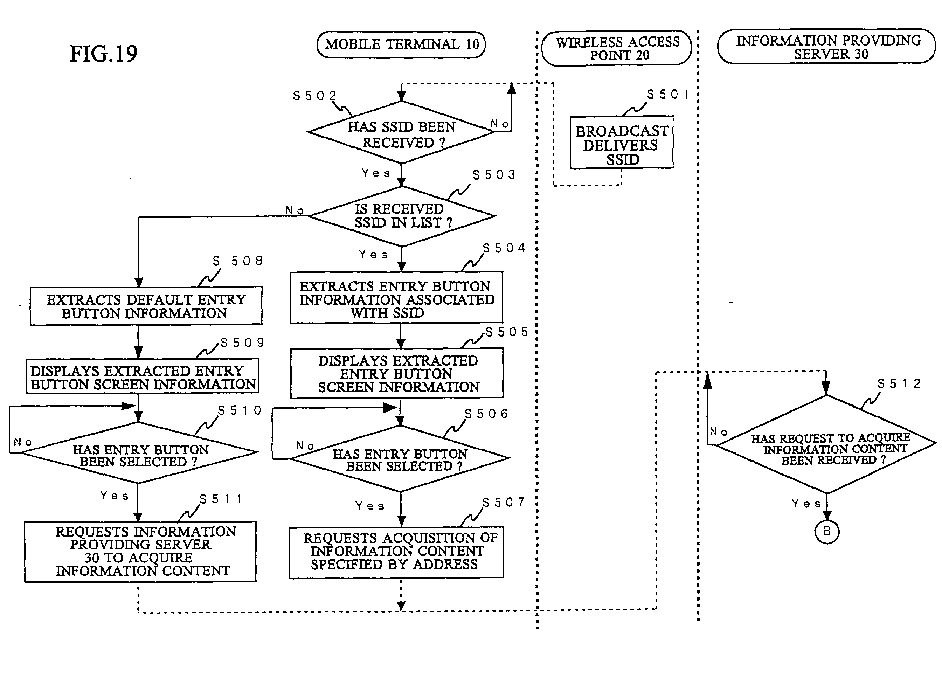

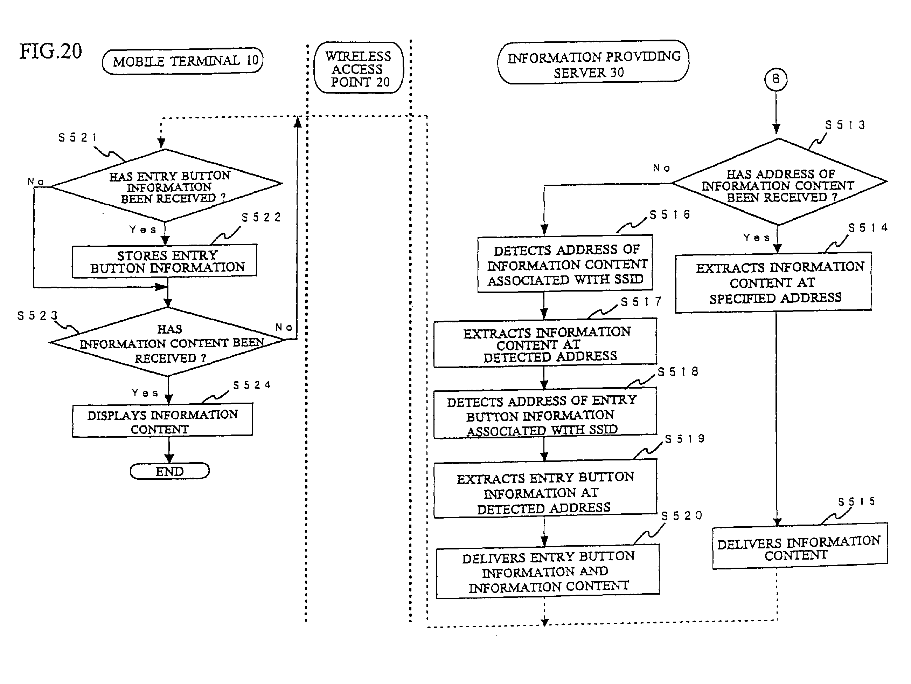

FIGS. 19 and 20 are flowcharts showing the flow of an information delivery processing by the information providing system in the Embodiment 3 of the present invention. Description will be made below on the information delivery processing by the information providing system in this embodiment, along the flowcharts of FIGS. 19 and 20 and with reference to FIG. 16.

Since the processing at steps S501 to S512 of FIG. 19 is similar to the processing at steps S401 to S412 of FIG. 14, description thereof will be omitted. The processing at and after step S513 of FIG. 20 will be described below.

When the communication section 32 of the information providing server 30 receives a request to acquire information content from the mobile terminal 10 (step S512: Yes), the control section 31 determines whether or not address information indicating the storage location of the information content has been received by the communication section 32 together with the acquisition request (step S513).

If it is determined that the address information indicating the storage location of information content has been received together with the acquisition request (step S513: Yes), then the control section 31 extracts information content specified by the address information from the information storage section 33 (step S514).

Then, the communication section 32 delivers the extracted information content to the mobile terminal 10 (step S517).

On the contrary, if it is determined that the address information indicating the storage location of information content has not been received together with the acquisition request (step S513: No), then the control section 31 refers to the SSID list in the information storage section 33 to detect an address of information content associated with the SSID received together with the acquisition request (step S516).

Then, the control section 31 extracts appropriate information content from the information storage section 33 based on the detected address (step S517).

Then, the control section 31 refers to the SSID list in the information storage section 33 to detect an address of entry button information associated with the SSID received together with the acquisition request (step S518).

The control section 31 extracts appropriate entry button information from the information storage section 33 based on the detected address (step S519).

Then, the communication section 32 delivers the extracted information content and entry button information to the mobile terminal 10 (step S520).

The control section 11 of the mobile terminal 10 determines whether or not the entry button information has been received by the wireless communication section 12 from the information providing server 30 (step S521).

If it is determined that the entry button information has not been received (step S521: No), then the process proceeds to step S523.

If it is determined that the entry button information has been received (step S512: Yes), then the control section 11 newly writes the received entry button information to the information storage section 13 (step S522).

Then, the control section 11 determines whether or not the information content has been received by the wireless communication section 12 from the information providing server 30 (step S523).

If it is determined that the information content has not been received (step S523: No), then the process proceeds to the processing of step S521.

If it is determined that the information content has been received (step S523: Yes), then the information storage section 13 stores the received information content. Then, the display section 14 displays the received information content (step S524).

As described above, according to this embodiment, the following advantages are obtained in addition to the advantages of the embodiments 1 and 2.

If the mobile terminal 10 does not hold entry button information associated with a received SSID, it acquires not only information content associated with the SSID but also entry button information associated with the SSID from the information providing server 30.

Accordingly, when moving into the access point area where the above SSID was received and acquiring information content next time, the mobile terminal 10 can display entry button screen information on which information within the access point area is shown. Thus, the mobile terminal user can recognize the summary of information content available in the area before acquiring the information content.

Furthermore, the information providing server 30 can omit the processing of detecting an address of information content with a received SSID as a key.

Though the above processings in the embodiments 1 to 3 are performed by a computer program held by the mobile terminal 10, the wireless access points 20, 50 and 60, the information providing server 30, the network charging server 70 or the information provision charging server 80, the program may be recorded on a recording medium such as an optical recording medium, magnetic recording medium, magneto-optic recording medium and semiconductor and downloaded therefrom. Alternatively, the program may be loaded from external equipment connected via a predetermined network.

The above-described embodiments are only examples of preferred embodiments, and embodiments of the present invention are not limited thereto. Various variations of the embodiments are possible within a range not departing from the spirit of the present invention.

## Claims

1. An information providing system comprising a mobile terminal, one or more wireless access points capable of communicating with the mobile terminal via a wireless communication network in respective communicable areas, and an information providing server connected to the wireless access points via a network;
the wireless access points having:
an acquisition request information delivery part for broadcast delivering acquisition request information for acquiring information content related to the respective communicable areas in the respective communicable areas; and
the mobile terminal having:
a delivered information receiver for receiving the acquisition request information;
a display for, when the acquisition request information is received by the acquisition request information receiving part, displaying screen information indicating that it is possible to acquire information content related to the communicable area in which the mobile terminal is currently located; and
an information acquisition request part for sending a request to acquire the information content to the information providing server when the screen information is displayed; and
the information providing server having:
an information content storage for storing one or more the information content;
an information content extracting part for receiving the request to acquire the information content from the mobile terminal and extracting appropriate information content from the one or more information content; and
an information content sending part for sending the extracted information content to the mobile terminal.

2. The information providing system according to claim 1, wherein
the acquisition request information delivery part delivers the acquisition request information including the screen information and address information about information content related to a communicable area in which the acquisition request information is delivered; and
the information acquisition request part sends a request to acquire the information content stored at an address shown by the address information.

3. An information providing system comprising a mobile terminal, one or more wireless access points capable of communicating with the mobile terminal via a wireless communication network in respective communicable areas, and an information providing server connected to the wireless access points via a network;
the wireless access points having:
an identification information delivery part for broadcast delivering identification information for identifying the access point in the communicable area of the access point; and
the mobile terminal having:
an acquisition request information storage for storing one or more pieces of acquisition request information for acquiring information content related to the respective communicable areas;
an identification information receiver for receiving the identification information;
an acquisition request information extracting part for, when the identification information is received by the identification information receiving part, extracting acquisition request information for acquiring information content related to a communicable area identified by the identification information from the one or more pieces of acquisition request information;
a display for displaying screen information indicating that it is possible to acquire information content related to the communicable area in which the mobile terminal is currently located, the screen information being included in the extracted acquisition request information; and
an information acquisition request part for sending a request to acquire the information content to the information providing server when the screen information is displayed; and
the information providing server having:
information content storage for storing one or more pieces of the information content;
an information content extracting part for receiving the request to acquire the information content from the mobile terminal and extracting appropriate information content from the one or more pieces of information content; and
an information content sending part for sending the extracted information content to the mobile terminal.

4. The information providing system according to claim 3, wherein
the acquisition request information storage stores the acquisition request information including the address information about information content related to a communicable area in which the acquisition request information is delivered; and
the information acquisition request part sends a request to acquire the information content stored at an address shown by the address information.

5. The information providing system according to claim 3, wherein
when the acquisition request information for acquiring information content related to a communicable area identified by the identification information received by the identification information receiving part is not stored in the acquisition request information storage, the display displays screen information indicating that it is possible to acquire the information content;
the acquisition request part sends the received identification information to the information providing server;
the information content storage stores the one or more pieces of information content in association with the identification information; and
the information content extracting part receives the identification information from the mobile terminal and extracts the information content associated with the received identification information.

6. The information providing system according to claim 5, wherein
the information providing server has:
a server information storage for storing the one or more pieces of acquisition request information in association with the identification information;
a server information extracting part for extracting the acquisition request information associated with the identification information received from the mobile terminal; and
a server information sending part for sending the extracted acquisition request information to the mobile terminal; and
the acquisition request information storage newly stores the acquisition request information sent from the information providing server.

7. The information providing system according to any one of claims 1 to 6, the information providing system further comprising an information provision charging server connected to the information providing server; wherein
the information providing server has:
a sending history storage for storing sending history of the information content sent by the information content sending part; and
a sending history sending part for sending the stored sending history to the information provision charging server; and
the information provision charging server has:
service use fee calculator for, when receiving the sending history from the information providing server, calculating an information delivery service use fee to be paid from a business entity developing business related to the information content to a business entity managing the information providing server, based on the received sending history.

8. The information providing system according to claim 7, wherein the service use fee, calculator calculates the information delivery service use fee based on information indicating the number of times the information content has been sent by the information content sending part, the information being included in the sending history.

9. The information providing system according to claim 7 or 8, wherein the service use fee calculator calculates the information delivery service use fee based on the data amount of the information content.

10. The information providing system according to any one of claims 1 to 9, the information providing system further comprising a network charging server connected to the network; wherein
the network charging server has network use fee calculator for calculating a fee for use of the network to be paid from a user of the mobile terminal and the business entity managing the information providing server to a business entity managing the network, based on information indicating use condition of the network by the mobile terminal and the information providing server.

11. A mobile terminal comprising:
a delivered information receiver for, in a communicable area enabling communication with a wireless access point, receiving acquisition request information for acquiring information content related to the communicable area;
a display for extracting screen information indicating that it is possible to acquire the information content from the received acquisition request information and displaying the screen information; and
an information acquisition request part for extracting address information about the information content from the received acquisition request information and sending a request to acquire the information content to an address shown by the address information when the screen information is displayed.

12. A mobile terminal comprising:
identification information receiver for, in a communicable area enabling communication with a wireless access point, receiving identification information for identifying the wireless access point;
an acquisition request information storage for storing one or more pieces of acquisition request information for acquiring information content related to the communicable area;
an acquisition request information extracting part for, when the identification information is received by the identification information receiving part, extracting acquisition request information for acquiring information content related to a communicable area identified by the identification information from the one or more pieces of acquisition request information;
a display for extracting screen information indicating that it is possible to acquire the information content from the extracted acquisition request information and displaying the screen information; and
an information acquisition request part for extracting address information about the information content from the extracted acquisition request information and sending a request to acquire the information content to an address shown by the address information when the screen information is displayed.

13. A wireless access point for performing wireless communication with a mobile terminal in a communicable area, the wireless access point broadcast delivering, within the communicable area, acquisition request information including screen information indicating that it is possible to acquire information content related to the communicable area and address information about the information content.

14. A charging server comprising:
a sending history input part for inputting sending history of sending of information content related to a communicable area of a wireless access point to a mobile terminal performing wireless communication with the wireless access point; and
a service use fee calculator for calculating an information delivery service use fee to be paid from a business entity developing business related to the information content to a business entity providing a service of sending the information content, based on the inputted sending history.

15. A charging server comprising:
a use condition information input part for, when a mobile terminal requests acquisition of information content related to a communicable area of a wireless access point from equipment on the sending side of the information content and acquires the information content as a response to the request via a network, inputting information indicating condition of use of the network by the mobile terminal and the equipment on the sending side of the information content; and
a network use fee calculator for calculating a fee for use of the network to be paid from a user of the mobile terminal and a business entity sending the information content to a business entity managing the network, based on the inputted network use condition information.

16. An information providing method, using a mobile terminal, one or more wireless access points capable of communicating with the mobile terminal via a wireless communication network in respective communicable areas, and an information providing server connected to the wireless access points via a network and comprising:
an acquisition request information delivery step of the wireless access point broadcast delivering acquisition request information for acquiring information content related to the respective communicable areas in the respective communicable areas; and
a delivered information receiving step of the mobile terminal receiving the acquisition request information;
a display step of, when receiving the acquisition request information, the mobile terminal displaying screen information indicating that it is possible to acquire information content related to the communicable area in which the mobile terminal is currently located;
an information acquisition request step of the mobile terminal sending a request to acquire the information content to the information providing server when the screen information is displayed;
an information content extracting step of the information providing server receiving the request to acquire the information content from the mobile terminal and extracting appropriate information content from the one or more pieces of information content stored in the server; and
an information content sending step of the information providing server sending the extracted information content to the mobile terminal.

17. An information providing method, using a mobile terminal, one or more wireless access points capable of communicating with the mobile terminal via a wireless communication network in respective communicable areas, and an information providing server connected to the wireless access points via a network and comprising:
an identification information delivery step of the respective wireless access points broadcast delivering identification information for identifying the respective access points in the respective communicable areas; and
an acquisition request information storage step of the mobile terminal storing one or more pieces of acquisition request information for acquiring information content related the respective communicable areas;
an identification information receiving step of the mobile terminal receiving the identification information;
an acquisition request information extracting step of, when receiving the identification information, the mobile terminal extracting acquisition request information for acquiring information content related to a communicable area identified by the identification information from the information content related to the one or more communicable areas, the information content being stored in the mobile terminal;
a display step of the mobile terminal displaying screen information indicating that it is possible to acquire information content related to the communicable area in which the mobile terminal is currently located, the screen information being included in the extracted acquisition request information;
an information acquisition request step of the mobile terminal sending a request to acquire the information content to the information providing server when the screen information is displayed;
an information content extracting step of the information providing server receiving the request to acquire the information content from the mobile terminal and extracting appropriate information content from the one or more pieces of information content stored in the server; and
an information content sending step of the information providing server sending the extracted information content to the mobile terminal.

18. The information providing method according to claim 17, wherein
at the display step, if the acquisition request information for acquiring information content related to a communicable area identified by the identification information received by the identification information receiver is not stored in the mobile terminal, the mobile terminal displays screen information indicating that it is possible to acquire the information content;
at the acquisition request step, the mobile terminal sends the received identification information to the information providing server; and
at the information content extracting step, the information providing server receives the identification information from the mobile terminal and extracts the information content associated with the received identification information from the one or more pieces of information content stored in the server in association with the identification information.

19. The information providing method according to claim 18, the information providing method comprising:
a server information extracting step of the information providing server extracting the acquisition request information associated with the identification information received from the mobile terminal from the one or, more pieces of acquisition request information stored in the server in association with the identification information;
a server information sending step of the information providing server sending the extracted acquisition request information to the mobile terminal; and
an acquisition request information storage step of the mobile terminal newly storing the acquisition request information sent from the information providing server in the mobile terminal.

20. The information providing method according to any one of claims 16 to 19, the information providing method comprising:
a sending history storage step of the information providing server storing sending history of the information content at the information content sending step in the information providing server;
a sending history sending step of the information providing server sending the stored sending history to an information provision charging server connected to the information providing server; and
a service use fee calculation step of, when receiving the sending history from the information providing server, the information providing charging server calculating an information delivery service use fee to be paid from a business entity developing business related to the information content to a business entity managing the information providing server, based on the received sending history.

21. The information providing method according to claim 20, wherein, at the service use fee calculation step, the information provision charging server calculates the information delivery service use fee based on information indicating the number of times the information content has been sent at the information content sending step, the information being included in the sending history.

22. The information providing method according to claim 20 or 21, wherein, at the service use fee calculation step, the information provision charging server calculates the information delivery service use fee based on the data amount of the information content.

23. The information providing method according to any one of claims 16 to 22, the information providing method comprising a network use fee calculation step of the network charging server connected to the network calculating a fee for use of the network to be paid from a user of the mobile terminal and the business entity managing the information providing server to a business entity managing the network, based on information indicating use condition of the network by the mobile terminal and the information providing server.
